# EUROPEAN PATENT APPLICATION

(11) **EP 0 940 747 A2**
(43) Date of publication of application: **08.09.1999**
(21) Application number: 99104264.9
(22) Date of filing: 03.03.1999
(51) Int. Cl.: G06F 9/46, G06F 9/44

(54) **Computer system**

(30) Priority: 05.03.1998 SE 9800696
(71) Applicant: NOKIA TECHNOLOGY GmbH, 75175 Pforzheim (DE)
(72) Inventor: Kalhour, Morteza, 59134 Motala (SE); Ivehammar, Stefan, 58933 Linköping (SE)

(57) **Abstract**

A method for adding, changing or removing classes of software system during the program run, by means of a system manager including information about the subsystems residing in modules in a modular computer system, without recompilation or reinstallation of any of the other modules, and other modules depending on the participant modules. According to the invention the said class is instantiated by requesting the location of the subsystem from the system manager. Thereafter, the classes mentioned can be used without involving the system manager.

## Description

### Technical Field

This invention relates to a method for adding, changing or removing classes from/to a software system during the program run, by means of a system manager including information about subsystems in modules in a modular computer system. This is accomplished without having to recompile and reload any of the other participant modules, and of modules depending on the participant modules.

### Acronyms and Abbreviations

- *Class:*: A software data structure containing one or more attributes (variables) and methods (functions) that can be used to manipulate the attributes.
- *Object:*: An instance of a class. In this context (even though it may be conceptually wrong) in many cases, *object* and *class* has been used interchangeably.
- *Subsystem:*: An object (containing zero or more internal objects) which provide a well defined functionality. A subsystem is the smallest software unit which could be dynamically added to the rest of a software system. Its internal structure and functionality is completely invisible to the rest of the system. Other software units may use the interface provided by the subsystem, in order to use its functionality in this context *object* and *subsystem* are used interchangeably.
- *Module:*: A software entity containing one or more subsystems. Modules are only used as a convenient packaging mechanism to put together subsystems which have a possible relation with each other. Modules do not provide any special functionality besides the packaging functionality mentioned above. It does not impose any restriction or roles on how subsystems are put together. Modules are only dynamically linkable entities. Hence, subsystems should be encapsulated in modules in order to be linked to the rest of the system. Modules are used internally by the system manager and are completely invisible to the rest of the system. A module could be thought as a file containing the implementation of one or more subsystems (objects).
- OO:: Object Oriented
- OOD:: Object Oriented Design
- OOL:: Object Oriented Language
- OOS:: Object Oriented Software system
- OS:: Operating System

### Prior Art

Due to the benefits offered by OOS to program producers, the use of this methodology has been increasing very rapidly since the introduction of it to the software community. In contrast to conventional function oriented software development where functions are the focal point of the design and implementation process, in OOS the so-called *objects* are the focus of the software construction.

Because of the increasing demand from the software community very sophisticated compilers have been developed for creating OOS. C++ and Java are two examples of these widely used OOLs.

While compilers supporting OO development have got more and more sophisticated and offer various functionality. Operating systems (OS) upon which software is executed have not been evolved significantly to support the requirements from the OOS. Most widely used operating systems used today are function based, hence providing pretty good facilities to function oriented software. These facilities do not always fulfil the requirements of OOS.

In order to compensate these legacies, many new OOLs have been developed containing functionalities which conceptually should be part of the OS. A very good example of these languages is Java which has become more and more popular because of functionalities like dynamic object linking and memory garbage collection.

Even though these new languages provide support for dynamic linking, using them is still not viable in systems where efficiency is a requirement or systems (like embedded systems) for which these new compilers do not exist.

Besides that they present following problems:
a) *They are not very efficient when it comes to speed*. For example Java which is very widely used today, is more than 10 to 20 times slower compared to the same code written in C++.
b) *Most of them lack real-time properties*. The object-oriented languages are not designed for multi-tasking environments and defiantly lack the real-time properties which are crucial in most embedded system. For example Java lacks this property. It has multi-tasking but does not fulfil the real-time requirements for an embedded system. Its garbage collection will block the system for several seconds which makes it completely unusable in real-time systems.
c) *Almost all embedded systems lack the support from these languages*. Because of the above reasons these languages have not been ported to odd processors and embedded environments. They only exist for the PC environment where there is no real-time requirement.

An other dimension to this problem is the huge amount of code already existing in many projects in various companies. These codes are mainly written in languages like C++ which does not directly support dynamic linking of new objects.

So here we are facing a paradox. On one hand there is a requirement to use existing compilers and OSs (not supporting dynamic linking of objects) and on the other hand the software system is required to be capable to dynamically link a new object.

One known solution for dynamic linking of object oriented software components is disclosed in US 5,659,751.

This document describes a solution which requires modification of the static linkers of the compiler. This has the disadvantage that this has to be done again whenever a new version of compiler is introduced.

Furthermore, modification of static linkers is not trivial and may introduce errors. In addition, modification of the operating system is also required and inheritance of dynamically loadable classes is not guaranteed. It is an object of this invention to overcome these disadvantages.

The challenge is to create a mechanism using facilities provided by the most common (function oriented) operating systems and well established OO compilers like C++, in order to provide an efficient, user-friendly and flexible way to dynamically add, remove and modify objects present in a running software system.

An other mechanism discussed in this context is a method which makes it possible for objects in a software system to use extended versions of objects without the need for them to be updated or modified. This means that new objects which are added to a system may use the new methods (functionality) provided by the newly updated (extended) objects. At the same time old objects will be able to use these extended objects without being concerned of any probable update or extension of these objects. This is a practical problem which has to be addressed in systems with update/extension capabilities at object level.

The proposed method in this invention is not in any way limited to any specific OOL (as far as it provides the most basic OO facilities) or any specific operating system. At the same time it does not require any modification to the compiler or the OS whatsoever.

Furthermore, it does not impose any restrictions or rules on how the design or implementation of OOS should be done. The only rule needed to be followed is that the allocation and release of a dynamically linked subsystem should be done through the means provided by the system manager. However, similar rules are also required in all programming languages (in functional oriented environments) in one way or another, if the dynamic linking facilities are to be used.

### Description of the Invention

The object of the invention is to provide a method for adding, extending or removing affected classes during the program run, by means of a system manager including information of subsystems residing in modules in a modular computer system, without recompilation and reinstallation of any of the other participating modules, and other modules depending on the participating modules. This can be attained by means of a class instantiation, the class belonging to one or more separately compiled modules. This is accomplished by receiving the location of said subsystem from the system manager. There after functionality and classes of said subsystems can be used without involving the system manager.

First the operation and the co-operation of the modules according to the invention are explained.

A module consists of a number of class definitions and functions using these class definitions for creating examples of these classes.

A downloaded module can contain one or more class definitions, which are combined to form the installed module. There is a module registration function, which is called when the module is to be installed and which introduces its content to the rest of the system. This function tells where the instantiation functions are to be found in the module, i.e. the functions being registered in a system manager. The purpose of this functions is to instantiate, i.e. exemplify, subsystems in the modules.

The problem being solved according to the invention relates to the extension and change of classes in real time. Object oriented design (OOD) is used according to the example of an embodiment, but the invention is applicable in other concepts as well.

The program language used according to the example of an embodiment is C++, but other program languages are possible.

A module system according to the invention is a system in which it is guaranteed that classes included in a module may be extended or changed in the future during execution without having to recompile or download all the other participating modules, and all modules depending on the first module. Other modules only have to be changed, compiled and downloaded if they have to make use of the new extended functionality in the changed module.

The following three technical problems have to be considered and solved to be able to build such a system:
- Instantiation, i.e. exemplification, of classes residing in the separately compiled modules
- Inheritance between classes residing in the separately compiled modules
- Version management of classes to guarantee that classes may be extended in the future.

According to the invention, dynamic linking of separately compiled, statically linked and downloaded modules is accomplished, during the program run, which is managed by the system manager. In order to do this the classes residing in the subsystems of the separately compiled modules have to be exemplified.

Since the modules are compiled separately and each linked statically, a subsystem in another module can not be instantiated directly. The instantiation of a subsystem has to be performed by means of the system manager mentioned. In order to use a subsystem, first of all the location of the subsystem has to be received from the system manager. Thereafter, the subsystem can be used directly, and other resources handled by the subsystem can be allocated without involving the system manager.

The dynamic linking of the object allocation function, registered in the system manager, and the object operations can be performed in different ways, not described here. For the classes, each method function automatically will get a unique "offset" to a base address, and each object contains this base address. In this way, object methods can be called exactly as in a statically linked system.

An "inheritance" between classes residing in separately compiled modules, so-called inter-module inheritance, using the method mentioned above, is relatively simple. It must be possible to extend every class, which problem is solved by introducing "shell" and "core" classes. The statically linked shell class acts like a shell for the dynamically linked core class, which contains the actual implementation. In this way it is guaranteed that not only the final class in an "inheritance series", but also all so-called base classes (classes superposed in the inheritance series) can be extended in the future without having to recompile and download all participant modules, and all modules depending on the participating modules. A base class in this connection means parts of a class not being instantiated, which parts separately can be included as a part of another class.

A class contains methods, i.e. functions, which are referred to directly. In an OOD system there are virtual methods as well, which are referred to indirectly. A virtual method table contains references to the indirectly accessible methods. The problem with class extension, i.e. adding of new methods to an existing class, has been solved by creating a new subclass in which the new methods are placed, i.e. the class is re-defined (see appendix, figure 2). This way it is guaranteed that the old methods keep the same "offset" in the virtual method table, which means that the modules that previously used the old class version, now can use the new, re-defined class version during the program run without having to be recompiled and downloaded again.

The software system according to the invention consists of a number of separately compiled modules the contents of which can be changed dynamically, i.e. during the program run.

The following functions are given by introducing a system manager:
- Registration and unregistration of downloaded modules and their subsystems
- Information about the hardware configuration
- Information about the current software configuration, i.e. registered modules and subsystems
- Allocation and release of subsystems.

The complete system consists of a number of downloaded modules, and each module consists of one or more subsystems. This means that the system manager is not only to manage modules, but also the subsystems within the modules. A subsystem does not know about modules, only about other subsystems. In fact, the subsystems interact with each other, not the modules.

The modules are only used to "packetise" the subsystems so that they can be downloaded and started. Since the modules are compiled separately, individual subsystems cannot be instantiated directly in another module. As mentioned above the instantiation of a subsystem has to be performed by means of the system manager giving the location of the subsystem. Thereafter, the resources handled by the subsystem can be allocated directly without involving the system manager.

Accordingly, when a module is downloaded, the system manager calls the module to get information about what subsystems the module contains. When a subsystem is needed, a request is made to the system manager to find the location of the desired subsystem (see appendix, figure1, step 1). The system manager finds the module containing the subsystem, orders the module to start the subsystem (see appendix, figure 1, step 2) and returns the location of the requested subsystem (see appendix, figure 1, step 5). Then the subsystem can be used directly as long as required. The system manager is not needed until another subsystem is to be found.

As mentioned above the design and the implementation of a subsystem are performed without any concern of modules. A subsystem can consist of any number of classes as long as one class is considered to represent the subsystem.

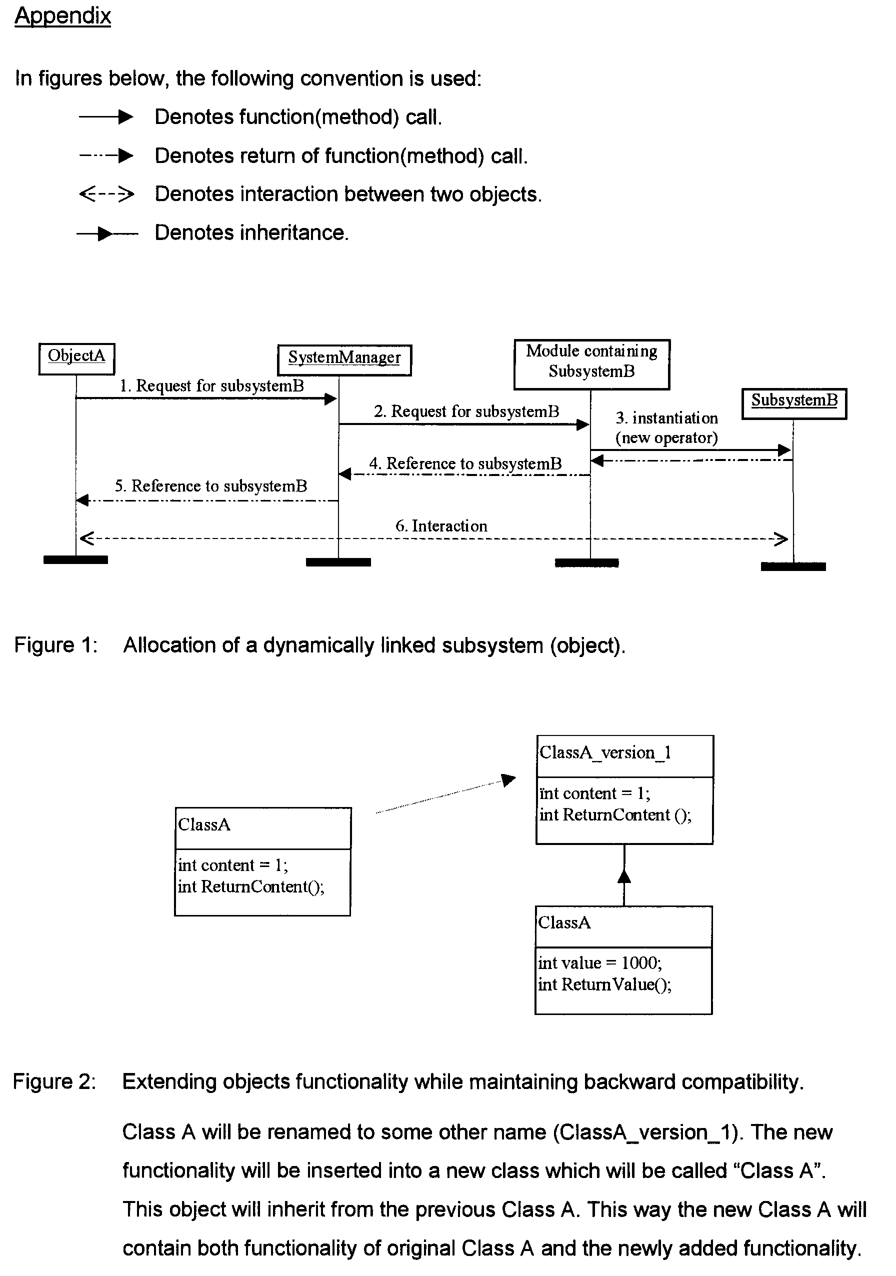

## Claims

1. A method for adding, changing or removing classes residing in a modular software system, during the run of the program, without recompilation and reinstallation of any of the other participant modules and other modules dependent of the participant modules, **characterised in that**
- a system manager registers all participating modules.
- the system manager receives information about subsystem instantiation functions, subsystem version numbers and other required information about the subsystems inside the module body, while registering the module.
- the system manager evaluates the received data, removes a previous version of a subsystem, if any, and saves the new one to the non-volatile memory.

2. A method as in claim 1, **characterised in that**
an instantiation of a subsystem (class) residing in a module is done by requesting the location of said subsystem from the system manager after which the mentioned subsystem (class) can be used without involving the system manager.

3. A method as in claim 1, **characterised in that**
the system manager acts as an abstraction layer making dynamic loading of new subsystems (classes) invisible to the rest of the system.

4. An apparatus for adding, changing or removing classes residing in a modular software system, during the run of the program, without recompilation and reinstallation of any of the other participant modules and other modules dependent on participant modules, **characterised in that**
it comprises a system manager which
- registers all participating modules,
- receives subsystem instantiation functions, subsystem version numbers and other required information from the subsystems inside the module body,
- evaluates the received data, removes a previous version of a subsystem, if any, and saves the new one to the non-volatile memory.
